# EUROPÄISCHE PATENTSCHRIFT

(11) **EP 4 053 017 B1**
(45) Veröffentlichungstag und Bekanntmachung des Hinweises auf die Patenterteilung: **31.07.2024**
(21) Anmeldenummer: 21159925.3
(22) Anmeldetag: 01.03.2021
(51) Int. Cl.: B64D 11/06

(54) **ENERGIEABSORPTIONSVORRICHTUNG FÜR EINEN SITZ EINES FAHRZEUGS UND SITZSYSTEM MIT EINER SOLCHEN ENERGIEABSORPTIONSVORRICHTUNG**
ENERGY ABSORBING DEVICE FOR A VEHICLE SEAT AND SEAT SYSTEM COMPRISING SUCH AN ENERGY ABSORBING DEVICE
DISPOSITIF D'ABSORPTION D'ÉNERGIE POUR UN SIÈGE D'UN VÉHICULE ET SYSTÈME DE SIÈGE DOTÉ D'UN TEL DISPOSITIF D'ABSORPTION D'ÉNERGIE

(43) Veröffentlichungstag der Anmeldung: 07.09.2022
(73) Patentinhaber: Autoflug GmbH, 25462 Rellingen (DE)
(72) Erfinder: Gerhard, Matthias, 21445 Wulfsen (DE); Ketelsen, Nick, 22303 Hamburg (DE); Bocklage, Marvin, 20148 Hamburg (DE); Testard, Mattia, 20259 Hamburg (DE); Blazic, Mislav, 20457 Hamburg (DE); Hubald, Ole Frederik, 20251 Hamburg (DE)
(74) Vertreter: Feucker, Max Martin

(56) Entgegenhaltungen:
- EP-A2- 1 197 429
- CN-A- 108 248 868
- US-A- 5 657 950
- US-A- 5 699 984
- US-A1- 2011 079 681
- US-A1- 2020 339 264

## Beschreibung

Die vorliegende Erfindung betrifft eine Energieabsorptionsvorrichtung für einen Sitz eines Fahrzeugs, insbesondere eines Luftfahrzeuges wie Hubschrauber, mit mindestens einer Einwirkungseinrichtung und mindestens einem mit der Einwirkungseinrichtung verbundenen Energieabsorber, wobei die Einwirkungseinrichtung zumindest im Hochlastfall wie bei einem Absturz eines Hubschraubers zur Energieabsorption auf den Energieabsorber einwirkt.

Die Erfindung betrifft zudem ein Sitzsystem für Fahrzeuge, insbesondere für Luftfahrzeuge wie Hubschrauber, mit einem in dem Fahrzeug befestigbaren Rahmen, einen an dem Rahmen verschiebbar gelagerten Sitz und eine Energieabsorptionsvorrichtung mit den vorgenannten Merkmalen, wobei der Sitz so mit einem Element der Energieabsorptionsvorrichtung fest verbunden ist, dass im Falle einer beispielsweise durch einen Absturz (Hochlastfall) verursachten Beschleunigung eine Verschiebung des Sitzes entlang des Rahmens durch die Energieabsorptionsvorrichtung gedämpft wird, indem die Einwirkungseinrichtung zur Energieabsorption auf den Energieabsorber einwirkt.

Der Energieabsorber kann beispielsweise als ein Rohr, Vierkantprofil oder T-Profil ausgebildet sein, welches bevorzugt durch die Einwirkungseinrichtung geführt ist. Der Energieabsorber kann auch als Stahlband, Stab oder ähnlichem ausgebildet sein.

Die Einwirkungseinrichtung kann beispielsweise einen Käfig umfassen, in dem bevorzugt mindestens eine Rolle als Bestandteil der Einwirkungseinrichtung drehbar gelagert ist. Die Einwirkungsvorrichtung kann alternativ eine Matrize umfassen, die bevorzugt in einem Käfig angeordnet ist. Von dem Käfig, der Matrize oder zwischen einer Rolle und dem Käfig oder bevorzugt zwischen zwei in dem Käfig drehbar gelagerten Rollen wird ein Spalt mit einer Spaltbreite ausgebildet, durch welchen Spalt der Energieabsorber hindurchgeführt ist. Außerhalb des Spalts weist der beispielsweise als Rohr ausgebildete Energieabsorber eine Querschnittsbreite auf, die größer ist als die Spaltbreite. Im Falle der Ausbildung von zwei Rollen, zwischen denen der Energieabsorber angeordnet ist, ist beispielsweise bekannt, dass das Rohr Auskerbungen aufweist, in denen die Rollen im Ausgangszustand angeordnet sind.

Es kann vorgesehen sein, dass der an dem Rahmen verschiebbar gelagerte Sitz beispielsweise mit dem Käfig der Einwirkungseinrichtung oder mit dem Energieabsorber fest verbunden ist, wobei entsprechend der Energieabsorber fest mit dem Rahmen oder die Einwirkungseinrichtung fest mit dem Rahmen verbunden ist.

Die Energieabsorptionsvorrichtung ist mit ihren Komponenten so ausgebildet, dass in einem Hochlastfall wie bei einem Absturz, zumindest wenn ein Insasse auf dem Sitz sitzt, der Sitz entlang des Rahmens bewegt wird. Während dieser durch den Aufprall des Fahrzeugs verursachten Bewegung des Sitzes wird der Energieabsorber relativ zu der Einwirkungseinrichtung bewegt, wobei der Energieabsorber insbesondere durch Verformung die Energie abbaut. So wird beispielsweise im Falle der Ausbildung des Energieabsorbers als Rohr dieses Rohr zwischen zwei am Käfig gelagerten Rollen platt gewalzt. Auf diese Weise kann ein Insasse vor zu hohen Krafteinwirkungen geschützt werden.

Eine Energieabsorptionsvorrichtung ist beispielsweise aus EP 3 183 171 B1 bekannt. Eine Energieabsorptionsvorrichtung mit den Merkmalen des Oberbegriffs des Anspruchs 1 ist beispielsweise zudem aus EP 1 197 429 A2 bekannt. Die Kraft, ab der die der Energieabsorber relativ zu der Einwirkungseinrichtung bewegt wird und somit auch die Energieabsorption beginnt, wird in der Regel über Eigenschaften der auch bei der Energieabsorption beteiligten Bauteile der Energieabsorptionsvorrichtung eingestellt. So kann beispielsweise über die Spaltbreite, die Wandstärke des Rohres oder das Material des Rohres die kritische Auslösekraft eingestellt werden. Die kritische Auslösekraft ist dabei insbesondere so einzustellen, dass die Energieabsorption bei relativ geringen Lastfällen (wie beispielsweise bei harten Landungen oder im regulären Betrieb) noch nicht überschritten wird. Ein weiteres Beispiel findet sich im Dokument US5699984A.

Es hat sich gezeigt, dass sich während des normalen Betriebs die Eigenschaften (beispielsweise durch Vibrationen oder harte Landungen) der Bauteile des Energieabsorbers und/oder der Einwirkungseinrichtung verändern. So hat sich gezeigt, dass es zu Kaltverschweißungen der Rollen und des Rohres kommen kann. Insbesondere kann es an dem Rand der Auskerbung an dem Rohr zu Materialaufbau kommen, wodurch die kritische Auslösekraft verändert wird. Diese steht aber in direkter Korrelation zu den Lasten, die auf die Wirbelsäule eines Insassen wirken.

Aufgabe der vorliegenden Erfindung ist es daher, die mit Bezug zum Stand der Technik geschilderten Nachteile zu beseitigen und insbesondere eine Energieabsorptionsvorrichtung anzugeben, mit der die kritische Auslösekraft durch die während eines normalen Einsatzes auftretenden Einflüsse nicht verändert wird. Eine Lösung für diese Aufgabe wird durch eine Energieabsorptionsvorrichtung mit den Merkmalen des Anspruchs 1 angegeben. Vorteilhafte Weiterbildungen der Energieabsorptionsvorrichtung sind in den abhängigen Ansprüchen und in der vorstehenden und nachfolgenden Beschreibung angegeben, wobei einzelne Merkmale der vorteilhaften Weiterbildungen in technisch sinnvoller Weise miteinander kombinierbar sind. Die Energieabsorptionsvorrichtung wird insbesondere in einem Sitzsystem für Fahrzeuge eingesetzt, wie es im Anspruch 8 sowie der entsprechenden Beschreibung beschrieben ist.

Die Energieabsorptionsvorrichtung umfasst also insbesondere mindestens eine Einwirkungseinrichtung sowie einen mit der Einwirkungseinrichtung gekoppelten Energieabsorber, wobei die Einwirkungseinrichtung zumindest im Hochlastfall (wie bei einem Absturz eines Hubschraubers) zur Energieabsorption auf den Energieabsorber einwirkt.

Es wird vorgeschlagen, dass der Energieabsorber und die Einwirkungseinrichtung im Ausgangszustand über ein Fixierungselement so miteinander verbunden sind, dass eine Relativbewegung zwischen dem Energieabsorber und der Einwirkungseinrichtung im Normalbetrieb minimiert oder verhindert ist. Das separate Fixierungselement ist also insbesondere direkt zwischen dem Energieabsorber und der Einwirkungseinrichtung angeordnet, sodass sich diese (bis auf durch Toleranzen bedingte minimalste Dimensionen) nicht zueinander bewegen können. Somit wird bevorzugt auch ermöglicht, dass der Energieabsorber und der in einem Hochlastfall an dem Energieabsorber unmittelbar anliegende Abschnitt der Einwirkungseinrichtung im Ausgangszustand voneinander beabstandet sein können. Somit wird aber auch verhindert, dass die Einwirkungseinrichtung und der Energieabsorber im Normalbetrieb (beispielsweise durch Vibrationen oder durch harte Landungen) aufeinander einwirken. Eine Veränderung der kritischen Auslösekraft während des Normalbetriebs ist somit vermieden.

Es wird insbesondere vorgeschlagen, dass das Fixierungselement mindestens eine Sollbruchstelle aufweist, an der das Fixierungselement im Hochlastfall bricht, sodass die Einwirkungseinrichtung und der Energieabsorber im Hochlastfall relativ zueinander bewegbar sind. Die Sollbruchstelle ist also eine bewusst vorgesehene Schwächung des Fixierungselements, die so dimensioniert ist, dass das Fixierungselement die Belastungen im normalen Betrieb aufnimmt. Die Sollbruchstellen kann beispielsweise eine Einkerbung im Material des Fixierungselements sein oder jede beliebige bewusst vorgesehene Schwächung. Eine solche Schwächung kann insbesondere durch eine geeignete Materialkombination (fest/spröde) oder geschwindigkeitsabhängige Materialparameter erreicht werden. Durch die Dimensionierung der Sollbruchstelle kann aber auch unmittelbar die kritische Auslösekraft vorgegeben werden. Bei Erreichen der kritischen Auslösekraft in einem Hochlastfall bricht das Fixierungselement an der Sollbruchstelle, sodass sich der Energieabsorber relativ zu der Einwirkungseinrichtung bewegen kann, wobei bei dieser Bewegung Energie durch den Energieabsorber abgebaut wird.

Mit dem eine Sollbruchstelle aufweisenden Fixierungselement ist ein Bauteil gegeben, mit welchem die kritische Auslösekraft unabhängig von den Eigenschaften der an der Energieabsorption beteiligten Bauteile eingestellt werden kann. Somit kann aber auch die kritische Auslösekraft gezielt auf verschiedene Sitzmodelle und Gewichte der Insassen eingestellt werden, ohne dabei den restlichen Verlauf des Energieabsorption durch den Energieabsorber zu beeinflussen. Beispielsweise können auch die Rollen oder die Matrizen der Einwirkungseinrichtung einen geringeren Durchmesser oder auch der Energieabsorber selbst ein anderes Material oder eine geringere Dicke aufweisen, wodurch die Energieabsorption optimiert werden kann. Die Energieabsorptionsvorrichtung kann somit über das Fixierungselement einfach an unterschiedliche Sitzsysteme angepasst werden.

Während es prinzipiell ausreichend ist, dass das Fixierungselement nur genau eine Sollbruchstelle aufweist, ist in einer bevorzugten Ausführungsform vorgesehen, dass das Fixierungselement mindestens zwei oder genau zwei Sollbruchstellen aufweist. Somit kann das Fixierungselement mit seinen beiden Enden fest mit der Einwirkungseinrichtung (beispielsweise mit dem Käfig der Einwirkungseinrichtung) verbunden sein, während das Fixierungselement mit einem mittleren Abschnitt den Energieabsorber (beispielsweise das Rohr) durchgreift. Dabei sind die Sollbruchstellen so an dem Fixierungselement angeordnet, dass dieses im Hochlastfall außerhalb des Energieabsorbers bricht.

Beispielsweise kann das Fixierungselement als Scherbolzen ausgebildet sein, welcher mit seinen Enden im Käfig der Einwirkungseinrichtung gelagert ist und das Rohr (als Energieabsorber) durchgreift.

Die Erfindung sowie das technische Umfeld werden im Nachfolgenden anhand der Figuren beispielhaft erläutert. Es zeigen schematisch
- Figur 1:: eine Energieabsorptionsvorrichtung in einer Perspektivansicht,
- Figur 2:: Bestandteile der Energieabsorptionsvorrichtung in einer Perspektivansicht und
- Figur 3:: eine Explosionsdarstellung der Energieabsorptionsvorrichtung.

Die in den Figuren dargestellte Energieabsorptionsvorrichtung für ein Sitzsystem eines Hubschraubers umfasst einen als Rohr ausgebildeten Energieabsorber 1, eine Einwirkungseinrichtung sowie ein Verbindungselement 6.

Das Verbindungselement 6 wird an eine in den Figuren nicht dargestellte Sitzschale angebracht, während die noch nachfolgend näher beschriebene Einwirkungseinrichtung mit einem Rahmen eines Sitzsystems verbunden wird, zu dem der Energieabsorber 1 parallel verläuft. Der Energieabsorber 1 ist jedenfalls über eine Schraube 11 mit einem Bügel 5 des Verbindungselements 6 verbunden.

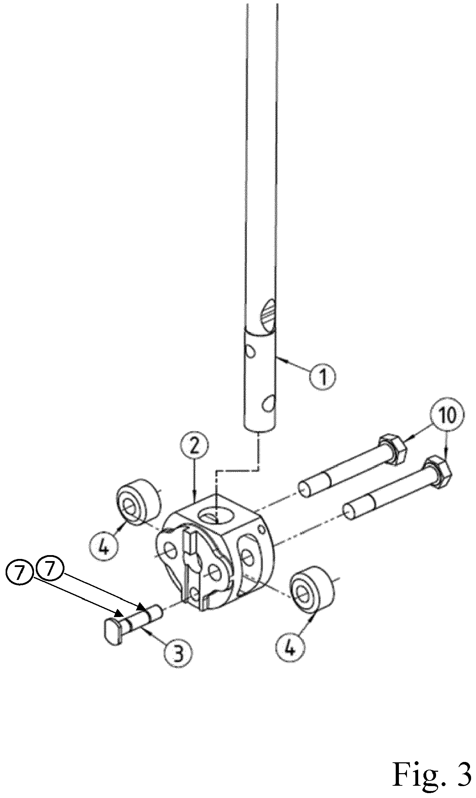

Wie insbesondere aus der Explosionsdarstellung der Figur 3 hervorgeht, umfasst die Einwirkungseinrichtung einen Käfig 2 sowie zwei drehbar an dem Käfig 2 gelagerte Rollen 4. Die Rollen 4 werden mittels Schrauben 10 in dem Käfig 2 drehbar gelagert, wobei die Schrauben 10 auch gleichzeitig zur Anbringung des Käfigs 2 an einem nicht dargestellten Rahmen eines Sitzsystems verwendet werden können. Zwischen den Rollen 4 ist ein Spalt ausgebildet. Im montierten Zustand ist der Energieabsorber 1 in dem Käfig 2 so eingelassen, dass die Rollen 4 jeweils in einer Auskerbung im Energieabsorber 1 angeordnet sind.

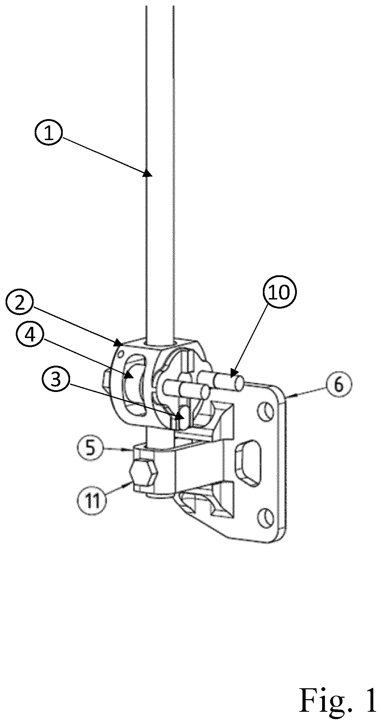

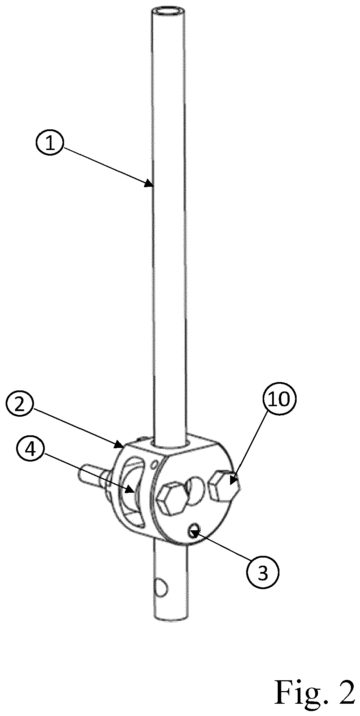

Darüber hinaus ist ein Fixierungselement 3 vorgesehen, dessen zwei Sollbruchstellen 7 in Figur 3 erkennbar sind. In dem in den Figuren 1 und 2 dargestellten Montagezustand durchgreift das als Scherbolzen ausgebildete Fixierungselement 3 eine Öffnung in dem Energieabsorber 1, während das Fixierungselement 3 mit seinen Enden im Käfig 2 gelagert ist. Das Fixierungselement 3 ist so dimensioniert, dass sich der Energieabsorber 1 und der Käfig 2 während eines normalen Betriebs des Hubschraubers (Vibrationen oder harte Landungen) nicht relativ zueinander bewegen können.

Die Sollbruchstellen 7 am Fixierungselement 3 sind hingegen so dimensioniert, dass im Falle eines Absturzes das Fixierungselement 3 an den Sollbruchstellen 7 brechen kann. Durch die Sollbruchstellen 7 wird also eine kritische Auslösekraft vorgegeben. Nach dem Auslösen/Brechen wird dann der über das Verbindungselement 6 mit einer Sitzschale verbundene Energieabsorber 1 durch den Käfig 2 gezogen, wobei während dieser Relativbewegung zwischen Energieabsorber 1 und Käfig 2 die Rollen 4 den Energieabsorber 1 platt walzen, sodass die von einem auf der Sitzschale sitzenden Insassen aufgebrachte Energie absorbiert wird.

Mit dem Sollbruchstellen 7 aufweisenden Fixierungselement 3 wird also ein separates Bauteil bereitgestellt, über welches die kritische Auslösekraft unabhängig von den bei der Energieabsorption mitwirkenden Bauteilen eingestellt werden kann.

### Bezugszeichenliste

- 1: Energieabsorber
- 2: Käfig
- 3: Fixierungselement
- 4: Rolle
- 5: Bügel
- 6: Verbindungselement
- 7: Sollbruchstelle
- 10: Schraube
- 11: Schraube

## Patentansprüche

1. Energieabsorptionsvorrichtung für einen Sitz eines Fahrzeugs, insbesondere eines Luftfahrzeuges wie Hubschrauber, mit
- mindestens einer Einwirkungseinrichtung (2, 4) und
- mindestens einem mit der Einwirkungseinrichtung (2, 4) gekoppelten Energieabsorber (1), wobei die Einwirkungseinrichtung (2, 4) zumindest im Hochlastfall zur Energieabsorption auf den Energieabsorber (1) einwirkt, wobei
die Einwirkungseinrichtung (2, 4) einen Spalt mit einer Spaltbreite ausbildet und der Energieabsorber (1) durch den Spalt hindurchgeführt ist und außerhalb der Einwirkungseinrichtung (2, 4) eine Querschnittsbreite aufweist, die größer als die Spaltbreite ist, wobei in einem Hochlastfall sich der Energieabsorber (1) relativ zu der Einwirkungseinrichtung (2, 4) bewegt, wobei der Energieabsorber (1) durch Verformung Energie abbaut,
**dadurch gekennzeichnet, dass**
der Energieabsorber (1) und die Einwirkungseinrichtung (2, 4) im Ausgangszustand über ein Fixierungselement (3) so miteinander verbunden sind, dass eine Relativbewegung zwischen dem Energieabsorber (1) und der Einwirkungseinrichtung (2, 4) im Normalbetrieb minimiert oder verhindert ist, wobei das Fixierungselement (3) mindestens eine Sollbruchstelle (7) aufweist, an der das Fixierungselement (3) im Hochlastfall bricht, so dass die Einwirkungseinrichtung (2, 4) und der Energieabsorber (1) im Hochlastfall relativ zueinander bewegbar sind.

2. Energieabsorptionsvorrichtung nach Anspruch 1, wobei das Fixierungselement (3) als Scherbolzen ausgebildet ist.

3. Energieabsorptionsvorrichtung nach Anspruch 1 oder 2, wobei der Energieabsorber (1) als Rohr ausgebildet ist.

4. Energieabsorptionsvorrichtung nach einem der vorhergehenden Ansprüche, wobei die Einwirkungseinrichtung einen Käfig (2) umfasst.

5. Energieabsorptionsvorrichtung nach Anspruch 4, wobei mindestens eine Rolle (4) als Bestandteil der Einwirkungseinrichtung drehbar an dem Käfig (2) gelagert ist.

6. Energieabsorptionsvorrichtung nach Anspruch 3 oder einem auf den Anspruch 3 rückbezogenen Anspruch, wobei ein Durchmesser des Rohrs außerhalb der Einwirkungseinrichtung (2, 4) größer ist als innerhalb der Einwirkungseinrichtung (2, 4).

7. Sitzsystem für Fahrzeuge, insbesondere für Luftfahrzeuge wie Hubschrauber, mit
- einem in dem Fahrzeug befestigbaren Rahmen,
- einem an dem Rahmen verschiebbar gelagerten Sitz und
- einer Energieabsorptionsvorrichtung nach einem der vorhergehenden Ansprüche, wobei
der Sitz so mit einem Element der Energieabsorptionsvorrichtung fest verbundenen ist, dass im Falle einer durch einen Hochlastfall verursachten Beschleunigung eine Verschiebung des Sitzes entlang des Rahmens durch die Energieabsorptionsvorrichtung gedämpft wird, indem die Einwirkungseinrichtung (2, 4) zur Energieabsorption auf den Energieabsorber (1) einwirkt.

## Claims

1. An energy absorption device for a seat of a vehicle, in particular an aircraft such as a helicopter, with
- at least one impact device (2, 4) and
- at least one energy absorber (1) coupled with the impact device, wherein the impact device (2, 4) acts on the energy absorber (1) for purposes of energy absorption, at least in a high load case, wherein
the impact device (2, 4) forms a gap with a gap width, and the energy absorber (1) is guided through the gap and has a cross sectional width outside of the impact device (2, 4) that is larger than the gap width, wherein the energy absorber (1) moves relative to the impact device (2, 4) in a high load case, wherein the energy absorber (1) reduces energy through deformation,
**characterized in that**
the energy absorber (1) and the impact device (2, 4) are connected with each other in the initial state via a fixation element (3) in such a way as to minimize or prevent a relative motion between the energy absorber (1) and the impact device (2, 4) during normal operation, wherein the fixation element (3) has at least one predetermined breaking point (7) at which the fixation element (3) breaks in the high load case, so that the impact device (2, 4) and the energy absorber (1) can be moved relative to each other in the high load case.

2. The energy absorption device according to claim 1, wherein the fixation element (3) is designed as a shear bolt.

3. The energy absorption device according to claim 1 or 2, wherein the energy absorber (1) is designed as a pipe.

4. The energy absorption device according to one of the preceding claims, wherein the impact device comprises a cage (2).

5. The energy absorption device according to claim 4, wherein at least one roller (4) is rotatably mounted on the cage (2) as a component of the impact device.

6. The energy absorption device according to claim 3 or a claim referring back to claim 3, wherein a diameter of the pipe outside of the impact device (2, 4) is larger than inside of the impact device (2, 4).

7. A seat system for vehicles, in particular for aircraft such as helicopters, with
- a frame that can be fastened in the vehicle,
- a seat movably mounted on the frame, and
- an energy absorption device according to one of the preceding claims, wherein
the seat is rigidly connected with an element of the energy absorption device in such a way that, given an acceleration caused by virtue of a high load case, a movement of the seat along the frame is cushioned by the energy absorption device as a result of the impact device (2, 4) acting on the energy absorber (1) for purposes of energy absorption.

## Revendications

1. Dispositif d'absorption d'énergie pour un siège d'un véhicule, en particulier d'un aéronef comme un hélicoptère, comprenant :
- au moins un dispositif d'action (2, 4) et
- au moins un absorbeur d'énergie (1) couplé au dispositif d'action (2, 4), dans lequel le dispositif d'action (2, 4), au moins en chute, agit sur l'absorbeur d'énergie (1) pour l'absorption d'énergie, dans lequel
le dispositif d'action (2, 4) forme une fente avec une largeur de fente et l'absorbeur d'énergie (1) est dirigé à travers la fente et présente hors du dispositif d'action (2, 4) une largeur de section qui est plus grande que la largeur de fente, dans lequel dans une chute, l'absorbeur d'énergie (1) se déplace par rapport au dispositif d'action (2, 4), dans lequel l'absorbeur d'énergie (1) diminue l'énergie par déformation,
**caractérisé en ce que**
l'absorbeur d'énergie (1) et le dispositif d'action (2, 4) sont ainsi reliés entre eux à l'état de départ par un élément de fixation (3), qu'un mouvement relatif entre l'absorbeur d'énergie (1) et le dispositif d'action (2, 4) est minimisé ou empêché en fonctionnement normal, dans lequel l'élément de fixation (3) présente au moins un point de rupture nominal (7) auquel l'élément de fixation (3) rompt dans la chute, de façon à ce que le dispositif d'action (2, 4) et l'absorbeur d'énergie (1) soient mobiles l'un vers l'autre dans la chute.

2. Dispositif d'absorption d'énergie selon la revendication 1, dans lequel l'élément de fixation (3) est formé en tant que boulon de cisaillement.

3. Dispositif d'absorption d'énergie selon la revendication 1 ou 2, dans lequel l'absorbeur d'énergie (1) est formé en tant que tube.

4. Dispositif d'absorption d'énergie selon l'une des revendications précédentes, dans lequel le dispositif d'action comprend une cage (2).

5. Dispositif d'absorption d'énergie selon la revendication 4, dans lequel au moins un rouleau (4) en tant que composante du dispositif d'action est disposé rotatif contre la cage (2).

6. Dispositif d'absorption d'énergie selon la revendication 3 ou une revendication se rapportant à la revendication 3, dans lequel un diamètre du tube à l'extérieur du dispositif d'action (2, 4) est plus grand qu'à l'intérieur du dispositif d'action (2, 4).

7. Système de siège pour véhicule, en particulier pour des aéronefs comme des hélicoptères, comprenant :
- un cadre pouvant être fixé dans le véhicule,
- un siège disposé mobile sur le cadre et
- un dispositif d'absorption d'énergie selon l'une des revendications précédentes, dans lequel
le siège est ainsi relié fixement à un élément du dispositif d'absorption d'énergie qu'en cas d'une accélération provoquée par une chute, un déplacement du siège le long du cadre est amorti par le dispositif d'absorption d'énergie, en ce que le dispositif d'action (2, 4) agit sur l'absorbeur d'énergie (1) pour l'absorption d'énergie.
